# EUROPEAN PATENT SPECIFICATION

(11) **EP 4 227 545 B1**
(45) Date of publication and mention of the grant of the patent: **22.10.2025**
(21) Application number: 23156015.2
(22) Date of filing: 10.02.2023
(51) Int. Cl.: F16B 5/04, F16B 19/06, F16B 37/06, H01H 11/04, H01H 11/06, H01H 50/54, F16B 1/00

(54) **STUD ASSEMBLY**
BOLZENANORDNUNG
ASSEMBLAGE DE GOUJON

(30) Priority: 11.02.2022 US 202217669518
(43) Date of publication of application: 16.08.2023
(73) Proprietor: Littelfuse, Inc., Chicago, IL 60631 (US)
(72) Inventor: Mantoan, Davide, Chicago, 60631 (US)
(74) Representative: Arnold & Siedsma

(56) References cited:
- FR-A3- 2 680 600
- US-A- 2 234 346
- US-B2- 10 446 351

## Description

### Field of the Disclosure

Embodiments of the present disclosure relate to devices having electrically conductive studs and, more particularly, to studs supporting high amperage current.

### Background

A variety of electrical devices, such as fuse assemblies and switches, use studs to secure the device to another device. A battery disconnect switch, for example, would include a stud, threaded at one end, to screw the disconnect switch to the battery being protected. One end of the stud is secured by screwing threaded end into a mating cavity of the battery while the other end of the stud is connected to internal circuitry, such as a bus bar, by brazing the stud to the circuitry.

In some cases, the studs are part of the current path passing through the electrical device. The studs are thus electrical contacts which support the rated amperage of the device. The part of the stud that is brazed to the internal circuitry may become disconnected when currents are very high, which limits the current rating of the electrical device containing the stud. Document FR 2 680 600 A3 discloses a stud assembly of the prior art, wherein a rivet is fixed within a cylindrical cavity of the stud.

It is with respect to these and other considerations that the present improvements may be useful.

### Summary

This Summary is provided to introduce a selection of concepts in a simplified form that are further described below in the Detailed Description. This Summary is not intended to identify key or essential features of the claimed subject matter, nor is it intended as an aid in determining the scope of the claimed subject matter, which is limited solely by the appended claims. An exemplary embodiment of a stud assembly in accordance with the present disclosure includes a stud, a sphere, and a rivet. The stud has a cylindrical cavity, the sphere is sized to fit in the cylindrical cavity, and the rivet has a pad and a neck, where the neck is sized to fit in the cylindrical cavity. The sphere is inserted into the cylindrical cavity, the neck is partially inserted into the cylindrical cavity, and the pad of the rivet is press-fit until the neck partially deforms against the sphere inside the cylindrical cavity.

The stud further comprises a threaded portion, to surround the cylindrical cavity, and a contact surface, wherein the contact surface is orthogonal to the threaded portion and the rivet engages with the contact surface.

The contact surface further comprises a contact, the contact being part of the contact surface but made of a different material than the contact surface.

A method of assembling a stud assembly in accordance with the present disclosure includes inserting a sphere into a cavity of a stud, where the cavity is cylindrical in shape, inserting a neck of a rivet into the cavity until the neck touches the sphere, and press-fitting the rivet into the cavity until the neck melds with the sphere, wherein the stud comprises a threaded portion to surround the cylindrical cavity, and a contact surface, wherein the contact surface is orthogonal to the threaded portion and the rivet engages with the contact surface, the contact surface further comprising a contact, the contact being part of the contact surface but made of a different material than the contact surface.

### Brief Description of the Drawings

**FIGs. 1A-1B** are diagrams illustrating a stud assembly, in accordance with exemplary embodiments;
**FIG. 2** is a diagram illustrating a rivet used by the stud assembly of **FIGs. 1A-1B****,** in accordance with exemplary embodiments;
**FIGs. 3A-3D** are diagrams illustrating a method of constructing the stud assembly of **FIGs. 1A-1B****,** in accordance with exemplary embodiments;
**FIG. 4** is a diagram illustrating the stud assembly of FIGs. **1A-1B****,** in accordance with exemplary embodiments;
**FIGs. 5A-5C** are diagrams illustrating the steps for constructing the stud assembly of **FIGs. 1A-1B****,** in accordance with exemplary embodiments;
**FIGs. 6A-6B** are diagrams illustrating a stage of constructing the stud assembly of **FIGs. 1A-1B****,** in accordance with exemplary embodiments; and
**FIGs. 7A-7B** are diagrams illustrating a stage of constructing the stud assembly of **FIGs. 1A-1B****,** in accordance with exemplary embodiments.

### Detailed Description

A stud assembly disclosed herein includes a stud, a rivet, and a sphere. The stud has a cylindrical cavity that is sized to receive both the sphere and the rivet. The rivet has a neck and a pad, where the neck fits into the cavity and the pad is press-fit into a contact surface of the stud. The rivet is bi-metallic, with the neck made of a first metal and the pad made of a second metal. The sphere is made of a third metal which is harder than the first and second metals. When press-fit into the cavity, the neck of the rivet deforms against the sphere, causing permanent attachment of the rivet to the stud cavity. The stud assembly is assembled without brazing operations and is rated to withstand a current up to 500 Amps or more.

For the sake of convenience and clarity, terms such as "top", "bottom", "upper", "lower", "vertical", "horizontal", "lateral", "transverse", "radial", "inner", "outer", "left", and "right" may be used herein to describe the relative placement and orientation of the features and components, each with respect to the geometry and orientation of other features and components appearing in the perspective, exploded perspective, and cross-sectional views provided herein. Said terminology is not intended to be limiting and includes the words specifically mentioned, derivatives therein, and words of similar import.

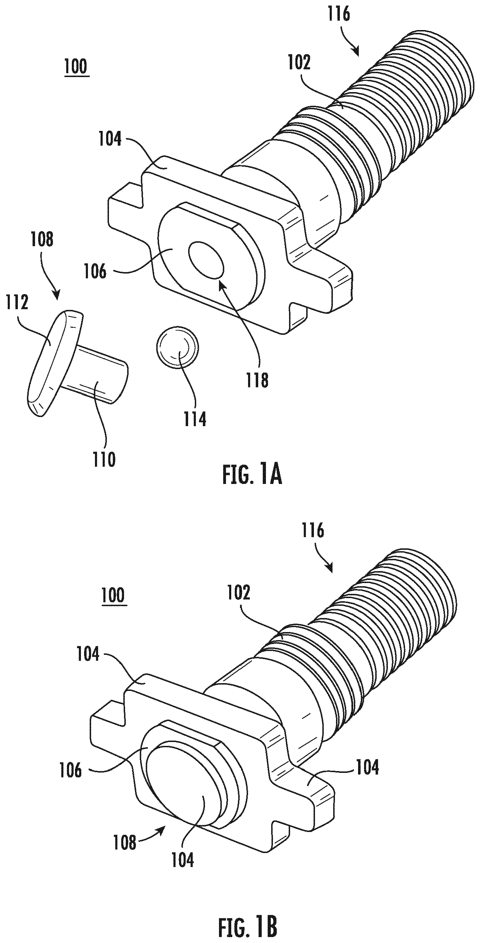

**FIGs. 1A** and **1B** are representative drawings of a stud assembly 100 for use in an electrical device, according to exemplary embodiments. **FIG. 1A** is a perspective view of the stud assembly 100 in a disassembled state while **FIG. 1B** is a perspective view of the fully assembled stud assembly. In exemplary embodiments, the stud assembly 100 is capable of withstanding currents of up to 500 amps or more. The stud assembly 100 features a stud 116, a rivet 108, and a sphere 114. In exemplary embodiments, the sphere 114 is inserted into a cavity 118 of the stud 116, after which the rivet 108 is also inserted into the cavity. As will be shown, the rivet 108 is to be press-fit into the stud 116 without additional welding or brazing operations and the sphere 114 facilitates establishing a good electrical connection between the stud 116 and the rivet 108.

The stud 116 includes a threaded portion 102, a contact surface 104, and a contact 106. The threaded portion 102 of the stud 116 is substantially cylindrical, with the threads being sized to be mated with a bolt or screwed into a threaded cylindrical opening. The threaded portion 102 surrounds the cylindrical cavity 118. The contact surface 104 is orthogonal to the threaded portion 102 and includes the contact 106. In exemplary embodiments, the contact 106 and cavity 118 are a unitary part of the stud 116. In exemplary not claimed embodiments, the stud 116, including the threaded portion 102 and the contact surface 104, is made of copper, with the threaded portion, the contact surface, the contact 106, and the cavity 118 being made of copper which is also silver-plated. The cavity 118 is a blind hole in the contact 106, with suitable depth and diameter for receiving the sphere 114 and the neck 110 of the rivet 108.

In exemplary embodiments, the rivet 108 is a bi-metallic device including a neck 110 made of a first metal and a pad 112 made of a second metal, with the first metal being different from the second metal. The neck 110 is orthogonal to the pad 112. In exemplary embodiments, the neck 110 a copper or copper alloy while the pad 112 is silver. Like the contact 106, the rivet 108 is silver plated, in exemplary embodiments, with the pad 112 of the rivet being 99.98% silver.

In exemplary embodiments, the sphere 114 is made of a material that is harder/less malleable than that of the neck 110. In some embodiments, the sphere 114 is made of stainless steel, which is harder than copper or silver.

As shown in **FIG. 1B****,** the rivet 108 fits into the cavity 118 of the stud 116 such that the pad 112 is flush against the contact 106. According to the invention, the sphere 114 is inserted into the cavity 118 before inserting the rivet 108. Further, the rivet 108 is inserted into the cavity 118 by press-fitting. Once press-fit into the cavity 118 of the stud 116, the rivet 108 is not removable, in exemplary embodiments, and the stud 116 can withstand up to 500 Amps of current without the rivet 108 being disjoined from the stud. As will be shown, the sphere 114 helps the rivet 108 to be connected to the inner surface of the stud 116, thus ensuring a good electrical connection therebetween.

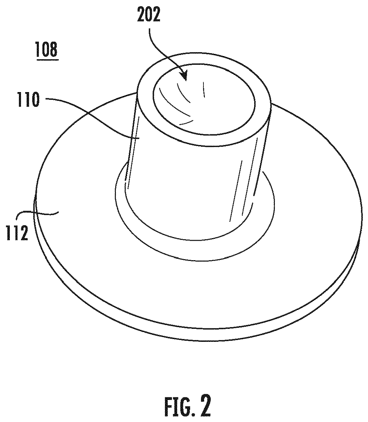

**FIG. 2** is a representative drawing of the rivet 108 of the stud assembly 100 of **FIGs. 1A** and **1B****,** according to exemplary embodiments. In the perspective view, a seat 202 is shown at the portion of the neck 110 not connected to the pad 112. The seat 202 is bowl-shaped and sized to fit against the sphere 114. When the rivet 108 is press-fit into the cavity 118 of the stud 116, the seat 202 will fit snugly against the sphere 114. Further, because the sphere 114 is made of a material that is harder than the neck 110 of the rivet 108, the neck 110 will partially deform around the sphere 114, as illustrated in further detail below.

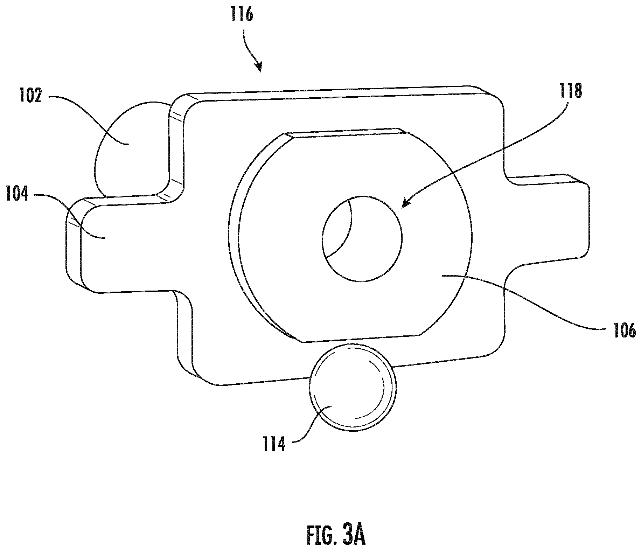

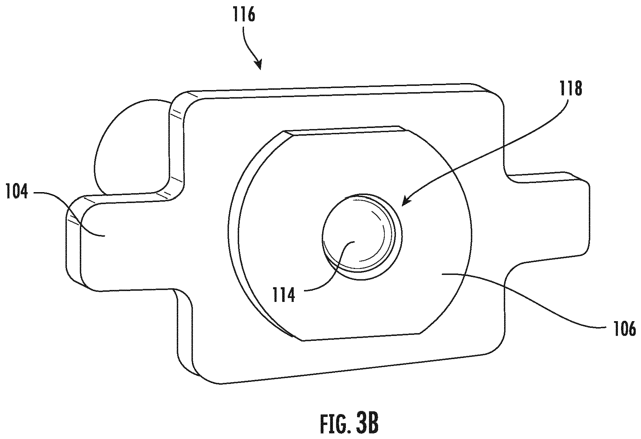

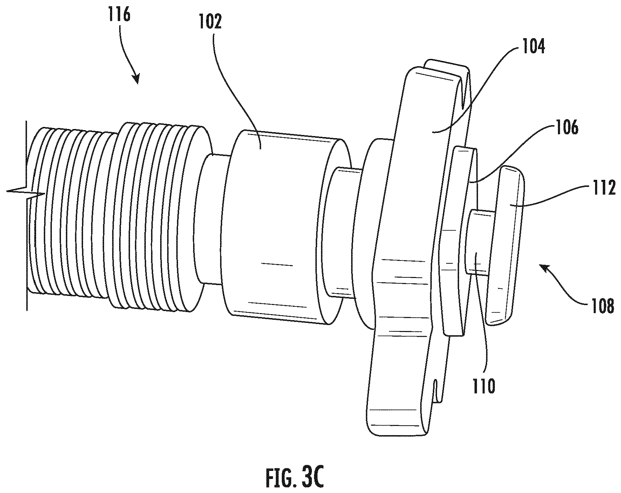

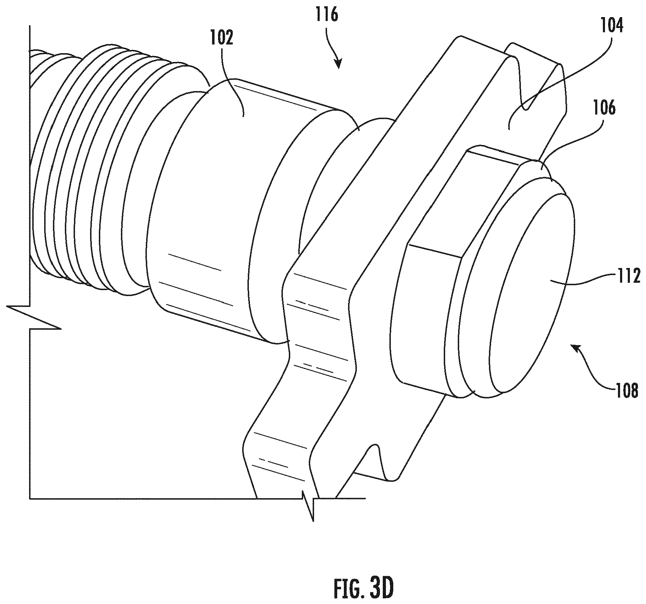

**FIGs. 3A-3D** are representative drawings of the stud assembly 100 of **FIGs. 1A** and **1B****,** according to exemplary embodiments. The figures illustrate the stud assembly 100 in various stages of construction, with **FIG. 3A** showing a first stage, **FIG. 3B** showing a second stage, **FIG. 3C** showing a third stage, and **FIG. 3D** showing a fourth stage. **FIGs. 3A-3D** thus provide a step-by-step illustration of how the rivet 108 is mated with the stud 116.

**FIG. 3A****,** is a perspective view of the stud 116, featuring the contact surface 104 while the threaded portion 102 is mostly obscured. The contact surface 104 includes the contact 106 and the cavity 118. In exemplary embodiments, the cavity 118 is a cylindrical structure with a diameter, *d₃,* that is slightly larger than 1) the diameter, *d₁,* of the neck 110 of the rivet 108 and 2) the diameter, *d₂*, of the sphere 114. The cavity 118 is thus sized to receive both the sphere 114 and the neck 110 of the rivet 108. In exemplary embodiments, the walls of the cavity 118 are made from the same material as the contact 106, silver plated copper or copper alloy. At the stage of **FIG. 3A****,** the sphere 114 is not inserted into the cavity 118.

**FIG. 3B** again shows the stud 116, this time with the sphere 114 inserted into the cavity 118. Thus, the second stage of the stud assembly 100 involves inserting the sphere 114 into the cavity 118. The third stage of the stud assembly 100 involves inserting the rivet 108 into the cavity 118. In the side perspective view of **FIG. 3C****,** the neck 110 of the rivet 108 is partially inserted into the cavity 118. At the third stage, the pad 112 of the rivet 108 is not yet touching the contact 106 of the stud 116.

**FIG. 3D** is also a side perspective view of the stud 116. At the final stage, the rivet 108 is fully inserted into the cavity 118, with the neck 110 of the rivet no longer being visible and the pad 112 of the rivet being flush against the contact 106 of the stud 116. According to the invention, the rivet 108 is partially inserted into the cavity 118 of the stud 116 until the neck 110 of the rivet touches the sphere 114 (third stage), then the neck partially surrounds the sphere once the rivet is press-fit into the cavity (fourth stage).

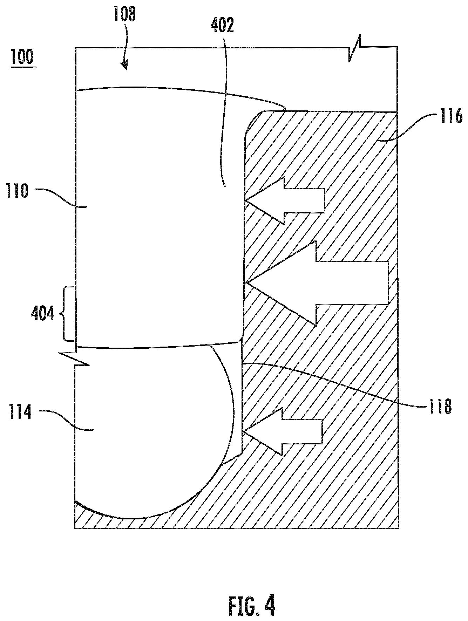

**FIG. 4** is a representative drawing of the stud assembly 100, according to exemplary embodiments. The side cross-sectional view of the stud 116 shows that the neck 110 of the rivet 108 is deformed against an inside surface 402 of the cavity 118. A join region 404 shows where the neck 110 of the rivet 108 mates with the sphere 114. Because the rivet 108 is made of a softer material than the sphere 114, there is some deformation of the neck 110 of the rivet against the sphere 114. In exemplary embodiments, at the join region 404, the diameter of the rivet 108 expands such that the rivet 108 will not come out of the cavity 118.

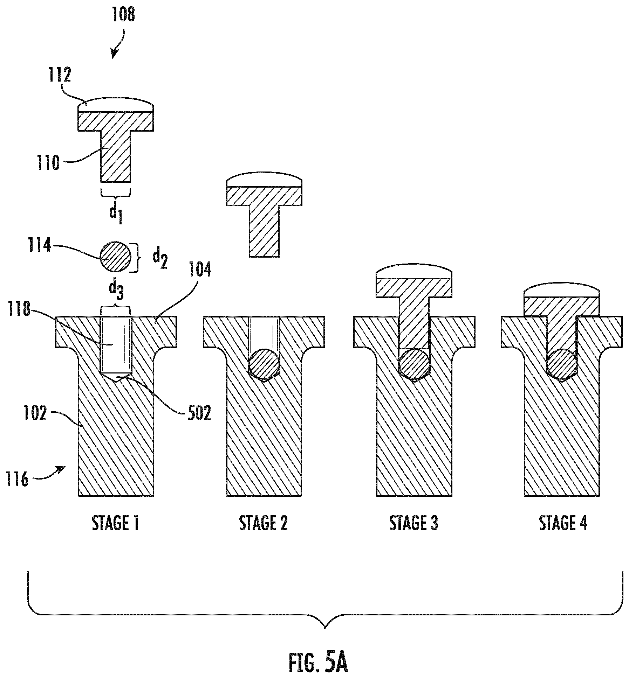

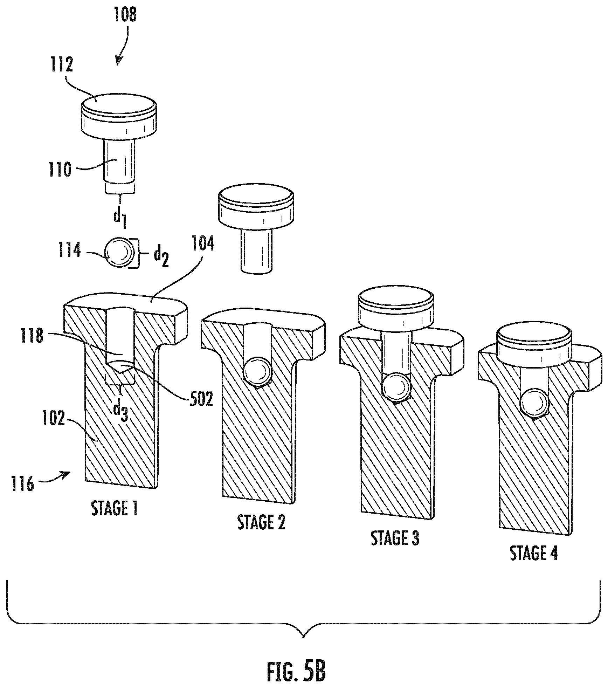

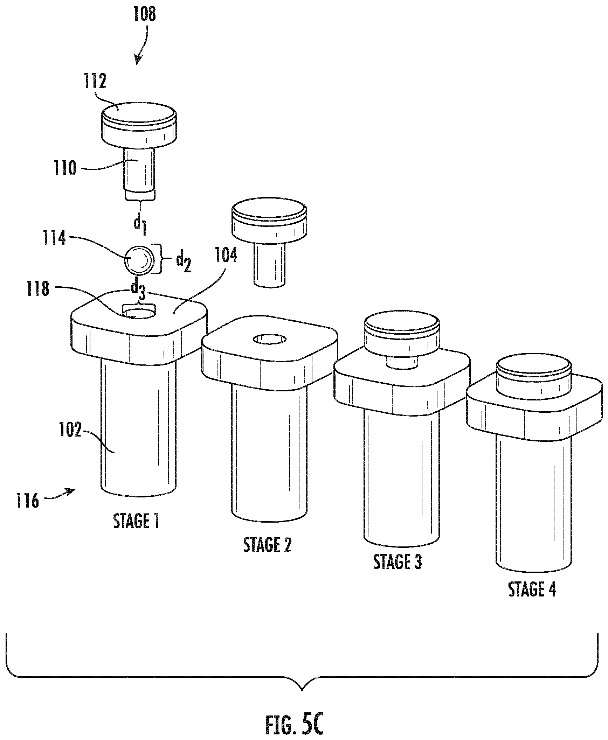

**FIGs. 5A-5C** are representative drawings of the stud assembly 100, according to exemplary embodiments. Each figure shows the stud assembly 100 in four stages of construction: **FIG. 5A** are side cross-sectional views; **FIG. 5B** are perspective cross-sectional views; and **FIG. 5C** are perspective views. Reference numbers for each element of the stud assembly 100 are shown in the first stage. The threaded portion 102 of the stud 116 is disposed vertically with the contact surface 104 being orthogonal thereto. The cavity 118 is a cylindrical opening in the stud 116, centrally disposed through the contact surface 104 and partially into the threaded portion 102. In exemplary embodiments, the cavity 118 has a tapered end 502 at one end, where the tapered end is the part of the cavity to seat the sphere 114.

At the first stage, the sphere 114 is positioned over the cavity 118 of the stud 116 and the rivet 108 is positioned over the sphere, as the rivet is meant to be inserted into the cavity after the sphere occupies the cavity. At the second stage, the sphere 114 is inserted into the cavity 118 until seated at the tapered end 502 of the cavity. At the third stage, the rivet 108 is inserted into the cavity. The pad 112 of the rivet 108 is not yet flush against the contact surface 104, as the rivet has been inserted but not yet press-fit into the cavity 118. The neck 110 of the rivet 108 is in the cavity 118 with the seat 202 of the rivet (**FIG. 2**) being disposed over the sphere 114 (stage 3). At the fourth stage, the rivet 108 is press-fit into the cavity 118. The pressure of the press-fit operation, as well as the relative softness of the rivet 108 as compared to the sphere 114, causes the neck 110 of the rivet to meld and become partially deformed around the sphere, thus filling any opening of the cavity 118. As illustrated particularly in **FIGs. 5A** and **5B** (stage 4), the neck 110 thus fills into available space inside the cavity 118. The use of a material for the rivet 108 that is slightly more malleable than that of the sphere 114 enable the neck 110 of the rivet to partially deform over the sphere.

The neck 110 of the rivet 108 has a first diameter, *d₁,* the sphere 114 has a second diameter, *d₂,* and the cavity 118 has a third diameter, *d₃.* In exemplary embodiments, the diameters, *d₁* and *d₂* are substantially equal and the diameter, *d₃,* is slightly larger than or the same as the diameters, *d₁* and *d₂.* Stated mathematically, *d₁* ≅ *d₂* ≤ *d₃.* These dimensions ensure that both the sphere 114 and the neck 110 of the rivet 108 fit inside the cavity 118.

In exemplary embodiments, once the rivet 108 is press-fit into the stud 116, the rivet is not removable. The rivet 108 is thus permanently affixed to the stud 116 without use of additional adhesives such as epoxy or the use of operations such as welding or brazing.

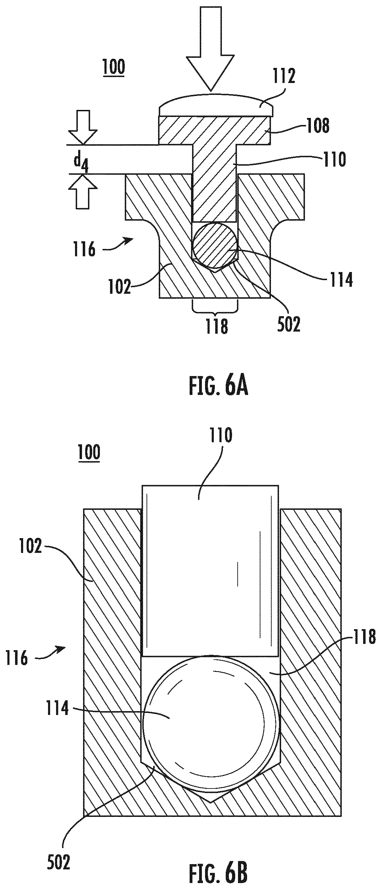

**FIGs. 6A-6B** are representative drawings of the stud assembly 100, according to exemplary embodiments. **FIG. 6A** is a side cross-sectional view of the third stage of the stud assembly 100 and **FIG. 6B** is a close-up view of the cavity 118 of the stud 116 during the third stage. As explained above, once the sphere 114 is inserted into the cavity 118, the rivet 108 is also inserted into the cavity, such that a portion of the neck 110 occupies the cavity. At the third stage, the top of the neck 110 is a distance, *d₄*, from the contact surface 104. Once pressure is applied to the pad 112, the rivet 108 is press-fit into the cavity 118, in exemplary embodiments. In the close-up of **FIG. 6B****,** the sphere 114 is inserted into the cavity 118 and seated at the tapered end 502 and the neck 110 of the rivet 108 is partially inserted into the cavity. Before press-fitting, there is space in the cavity 118 between the sphere 114 and the rivet 108.

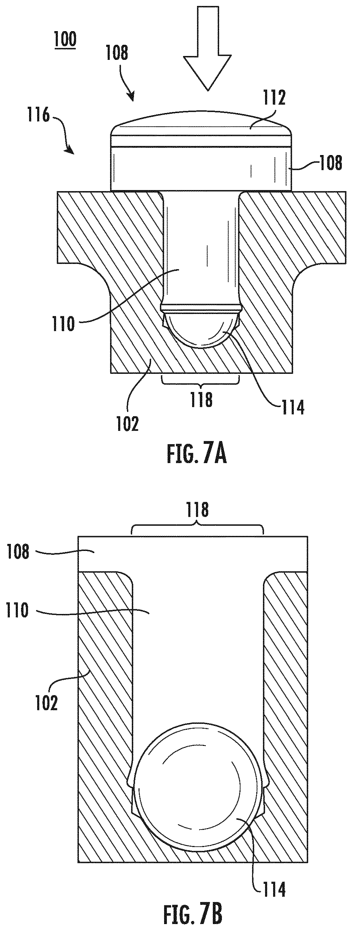

**FIGs. 7A** and **7B** are representative drawings of the stud assembly 100, according to exemplary embodiments. **FIG. 7A** is a side cross-sectional view of the fourth stage of the stud assembly 100 and **FIG. 7B** is a close-up view of the cavity 118 of the stud 116 during the fourth stage. In the fourth stage, the rivet 108 is press-fit into the cavity 118 of the stud 116. This causes the neck 110 of the rivet 108 to deform against the sphere 114. In **FIG. 7A****,** a portion of the sphere 114 is obscured by the neck 110 of the rivet 108. In exemplary embodiments, the deformation of the neck 110 causes the rivet to cover about half the sphere 114. When surrounding part of the sphere 114, the rivet 108 fills in any gaps of the cavity 118, as shown in **FIG. 7B****.** Thus, a pressure-induced coupling of the neck 110 of the rivet 108 to the sphere 114 results from the press-fitting, in exemplary embodiments.

In contrast to legacy stud assemblies, the stud assembly 100 can withstand a high amperage of current. Legacy stud assemblies may join the rivet to the stud using brazing operations. Brazing is a process in which metals are joined by melting a filler metal into the joint to create strong permanent bonds. The alloys used for brazing melt at lower temperatures than copper. Brass or silver may be used to ensure that electrical conductivity is maintained between the rivet and the stud. Legacy stud assemblies that employ brazing are not able to receive current higher than about 250 Amps.

The stud assembly 100, by contrast, can receive current as high as 500 Amps or more. In one embodiment, the stud assembly 100 can receive current as high as 2000 Amps for up to ten seconds. The maximum transmissible amperage is limited only by the voltage drop between the stud 116 and the rivet 108, which heat up the system. The stud assembly 100 withstands high temperatures better than legacy studs that use brazing. Further, the stud assembly 100 is manufactured in less time and at a lower cost than stud assemblies that employ brazing, in some embodiments. In exemplary embodiments, the stud assembly 100 may be used in circuitry, such as battery disconnect switches, that is rated to receive 500 Amps of current.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.
While the present disclosure makes reference to certain embodiments, numerous modifications, alterations and changes to the described embodiments are possible without departing from the sphere and scope of the present disclosure, as defined in the appended claim(s). Accordingly, it is intended that the present disclosure not be limited to the described embodiments, but that it has the full scope defined by the language of the following claims.

## Claims

1. A stud assembly (100) comprising:
a stud (116) having a cylindrical cavity (118) formed therein;
a sphere (114) to be inserted into the cylindrical cavity (118);
a rivet (108) comprising a pad (112) and a neck (110) extending orthogonally from the pad (112), wherein the neck (110) is disposed within the cylindrical cavity (118) and terminates in an end that abuts, and is deformed by, the sphere (114),
the stud (116) further comprising a threaded portion (102), to surround the cylindrical cavity (118), and a contact surface (104), wherein the contact surface is orthogonal to the threaded portion (102) and the rivet (108) engages with the contact surface,
the contact surface further comprising a contact (106), the contact being part of the contact surface but made of a different material than the contact surface.

2. The stud assembly (100) of claim 1, wherein the contact is made of copper and/or wherein the contact is silver-plated.

3. The stud assembly (100) of claim 1 or 2, wherein the pad (112) is silver and the neck (110) is copper.

4. The stud assembly (100) of any of the claims 1-3, wherein the rivet (108) is not removable once press-fit into the cylindrical cavity (118) of the stud (116).

5. The stud assembly (100) of any of the claims 1-4, wherein the stud (116) can withstand up to 500 Amps of current without the rivet (108) being disjoined from the stud (116).

6. The stud assembly (100) of any of the preceding claims, the rivet (108) further comprising a seat, wherein the pad (112) is disposed at a first end of the neck (110) and the seat is disposed at a second, opposite end of the neck (110), preferably wherein the seat is bowl-shaped and sized to fit over the sphere (114).

7. The stud assembly (100) of any of the preceding claims, the cylindrical cavity (118) further comprising a tapered end, wherein the sphere (114) is disposed at the tapered end once inserted into the cylindrical cavity (118).

8. The stud assembly (100) of any of the preceding claims, wherein the rivet (108) and the stud (116) are electrically conductive.

9. A method of assembling a stud assembly (100) comprising:
inserting a sphere (114) into a cavity (118) of a stud (116), the cavity (118) being cylindrical,
inserting a neck (110) of a rivet (108) of into the cavity (118) until the neck (110) touches the sphere (114); and
press-fitting the rivet (108) into the cavity (118) until the neck (110) deforms against the sphere (114),
wherein the stud (116) comprises a threaded portion (102) to surround the cylindrical cavity (118), and a contact surface (104), wherein the contact surface is orthogonal to the threaded portion (102) and the rivet (108) engages with the contact surface, the contact surface further comprising a contact (106), the contact being part of the contact surface but made of a different material than the contact surface.

10. The method of claim 9, the rivet (108) further comprising a pad (112), wherein the pad (112) does not contact the stud (116) until the rivet (108) is press-fit into the cavity (118).

11. The method of claim 9 or 10, wherein the neck (110) is made of a first metal.

12. The method of any of the claims 9-11, wherein the sphere (114) is made of a second metal.

13. The method of claim 12, wherein the second metal is harder than the first metal.

14. The method of claims 9 or 10, wherein the rivet (108) is bi-metallic, with the neck (110) being made of a first metal and the pad (112) being made of a second metal.

15. The method of any of the claims 9-14, wherein the rivet (108) and the stud are electrically conductive and/or wherein the pad (112) is silver and the neck (110) is copper.

## Patentansprüche

1. Bolzenbaugruppe (100), umfassend:
einen Bolzen (116), der einen darin ausgebildeten zylindrischen Hohlraum (118) aufweist;
eine Kugel (114), die in den zylindrischen Hohlraum (118) eingesetzt wird;
einen Niet (108), umfassend ein Pad (112) und einen Hals (110), der sich orthogonal von dem Pad (112) erstreckt, wobei der Hals (110) innerhalb des zylindrischen Hohlraums (118) eingerichtet ist und in einem Ende endet, das an die Kugel (114) angrenzt und durch diese verformt wird,
der Bolzen (116) ferner umfassend einen Gewindeabschnitt (102), um den zylindrischen Hohlraum (118) zu umgeben, und eine Kontaktoberfläche (104), wobei die Kontaktoberfläche orthogonal zu dem Gewindeabschnitt (102) ist und der Niet (108) mit der Kontaktoberfläche in Eingriff steht,
die Kontaktoberfläche ferner umfassend einen Kontakt (106), wobei der Kontakt Teil der Kontaktoberfläche ist, jedoch aus einem unterschiedlichen Material als die Kontaktoberfläche gefertigt ist.

2. Bolzenbaugruppe (100) nach Anspruch 1, wobei der Kontakt aus Kupfer gefertigt ist und/oder wobei der Kontakt versilbert ist.

3. Bolzenbaugruppe (100) nach Anspruch 1 oder 2, wobei das Pad (112) aus Silber ist und der Hals (110) aus Kupfer ist.

4. Bolzenbaugruppe (100) nach einem der Ansprüche 1 bis 3, wobei der Niet (108), sobald er in den zylindrischen Hohlraum (118) des Bolzens (116) eingepresst ist, nicht entfernbar ist.

5. Bolzenbaugruppe (100) nach einem der Ansprüche 1 bis 4, wobei der Bolzen (116) einem Strom von bis zu 500 Ampere standhalten kann, ohne dass sich der Niet (108) von dem Bolzen (116) löst.

6. Bolzenbaugruppe (100) nach einem der vorstehenden Ansprüche, der Niet (108) ferner umfassend einen Sitz, wobei das Pad (112) an einem ersten Ende des Halses (110) eingerichtet ist und der Sitz an einem zweiten, gegenüberliegenden Ende des Halses (110) eingerichtet ist, vorzugsweise wobei der Sitz schalenförmig und bemessen ist, um über die Kugel (114) zu passen.

7. Bolzenbaugruppe (100) nach einem der vorstehenden Ansprüche, der zylindrische Hohlraum (118) ferner umfassend ein konisches Ende, wobei die Kugel (114) an dem konischen Ende eingerichtet wird, sobald sie in den zylindrischen Hohlraum (118) eingesetzt wird.

8. Bolzenbaugruppe (100) nach einem der vorstehenden Ansprüche, wobei der Niet (108) und der Bolzen (116) elektrisch leitfähig sind.

9. Verfahren zum Bauen einer Bolzenbaugruppe (100), umfassend:
Einsetzen einer Kugel (114) in einen Hohlraum (118) eines Bolzen (116), wobei der Hohlraum (118) zylindrisch ist,
Einsetzen eines Halses (110) eines Niets (108) in die Hohlraum (118), bis der Hals (110) die Kugel (114) berührt; und
Einpressen des Niets (108) in den Hohlraum (118), bis sich der Hals (110) gegen die Kugel (114) verformt,
wobei der Bolzen (116) einen Gewindeabschnitt (102), um den zylindrischen Hohlraum (118) zu umgeben, und eine Kontaktoberfläche (104) umfasst, wobei die Kontaktoberfläche orthogonal zu dem Gewindeabschnitt (102) ist und der Niet (108) mit der Kontaktoberfläche in Eingriff steht, die Kontaktoberfläche ferner umfassend einen Kontakt (106), wobei der Kontakt Teil der Kontaktoberfläche ist, aber aus einem unterschiedlichen Material als die Kontaktoberfläche gefertigt ist.

10. Verfahren nach Anspruch 9, der Niet (108) ferner umfassend ein Pad (112), wobei das Pad (112) den Bolzen (116) nicht berührt bis der Niet (108) in den Hohlraum (118) eingepasst ist.

11. Verfahren nach Anspruch 9 oder 10, wobei der Hals (110) aus einem ersten Metall gefertigt ist.

12. Verfahren nach einem der Ansprüche 9 bis 11, wobei die Kugel (114) aus einem zweiten Metall gefertigt ist.

13. Verfahren nach Anspruch 12, wobei das zweite Metall härter ist als das erste Metall.

14. Verfahren nach Anspruch 9 oder 10, wobei der Niet (108) bimetallisch ist, wobei der Hals (110) aus einem ersten Metall und das Pad (112) aus einem zweiten Metall gefertigt ist.

15. Verfahren nach einem der Ansprüche 9 bis 14, wobei der Niet (108) und der Bolzen elektrisch leitfähig sind und/oder wobei das Pad (112) aus Silber ist und der Hals (110) aus Kupfer ist.

## Revendications

1. Ensemble goujon (100), comprenant :
un goujon (116) ayant une cavité cylindrique (118) formée dans celui-ci ;
une sphère (114) à insérer dans la cavité cylindrique (118) ;
un rivet (108) comprenant un tampon (112) et un col (110) s'étendant orthogonalement à partir du tampon (112), dans lequel le col (110) est disposé à l'intérieur de la cavité cylindrique (118) et se termine par une extrémité qui vient en butée contre la sphère (114) et est déformée par celle-ci,
le goujon (116) comprenant en outre une partie filetée (102) pour entourer la cavité cylindrique (118) et une surface de contact (104), dans lequel la surface de contact est orthogonale à la partie filetée (102) et le rivet (108) vient en prise avec la surface de contact,
la surface de contact comprenant en outre un contact (106), le contact faisant partie de la surface de contact mais étant constitué d'un matériau différent de celui de la surface de contact.

2. Ensemble goujon (100) selon la revendication 1, dans lequel le contact est en cuivre et/ou dans lequel le contact est plaqué argent.

3. Ensemble goujon (100) selon la revendication 1 ou 2, dans lequel le tampon (112) est en argent et le col (110) en cuivre.

4. Ensemble goujon (100) selon l'une quelconque des revendications 1 à 3, dans lequel le rivet (108) n'est pas amovible une fois ajustépar pression dans la cavité cylindrique (118) du goujon (116).

5. Ensemble goujon (100) selon l'une quelconque des revendications 1 à 4, dans lequel le goujon (116) peut supporter jusqu'à 500 ampères de courant sans que le rivet (108) ne soit désolidarisé du goujon (116).

6. Ensemble goujon (100) selon l'une quelconque des revendications précédentes, le rivet (108) comprenant en outre un siège, dans lequel le tampon (112) est disposé à une première extrémité du col (110) et le siège est disposé à une seconde extrémité opposée du col (110), de préférence, dans lequel le siège a la forme d'un bol et est dimensionné pour s'adapter à la sphère (114).

7. Ensemble goujon (100) selon l'une quelconque des revendications précédentes, la cavité cylindrique (118) comprenant en outre une extrémité conique, dans lequel la sphère (114) est disposée à l'extrémité conique une fois insérée dans la cavité cylindrique (118).

8. Ensemble goujon (100) selon l'une quelconque des revendications précédentes, dans lequel le rivet (108) et le goujon (116) sont électriquement conducteurs.

9. Procédé d'assemblage d'un ensemble goujon (100), comprenant :
l'insertion d'une sphère (114) dans une cavité (118) d'un goujon (116), la cavité (118) étant cylindrique,
l'insertion d'un col (110) d'un rivet (108) dans la cavité (118) jusqu'à ce que le col (110) touche la sphère (114) ; et
l'ajustement par pression du rivet (108) dans la cavité (118) jusqu'à ce que le col (110) se déforme contre la sphère (114),
dans lequel le goujon (116) comprend une partie filetée (102) pour entourer la cavité cylindrique (118), et une surface de contact (104), dans lequel la surface de contact est orthogonale à la partie filetée (102) et le rivet (108) vient en prise avec la surface de contact, la surface de contact comprenant en outre un contact (106), le contact faisant partie de la surface de contact mais étant constitué d'un matériau différent de celui de la surface de contact.

10. Procédé selon la revendication 9, le rivet (108) comprenant en outre un tampon (112), dans lequel le tampon (112) n'entre pas en contact avec le goujon (116) tant que le rivet (108) n'est pas ajusté par pression dans la cavité (118).

11. Procédé selon la revendication 9 ou 10, dans lequel le col (110) est fait d'un premier métal.

12. Procédé selon l'une quelconque des revendications 9 à 11, dans lequel la sphère (114) est faite d'un second métal.

13. Procédé selon la revendication 12, dans lequel le second métal est plus dur que le premier métal.

14. Procédé selon les revendications 9 ou 10, dans lequel le rivet (108) est bimétallique, le col (110) étant fait d'un premier métal et le tampon (112) étant fait d'un second métal.

15. Procédé selon l'une quelconque des revendications 9 à 14, dans lequel le rivet (108) et le goujon sont électriquement conducteurs et/ou dans lequel le tampon (112) est en argent et le col (110) est en cuivre.
